# EUROPÄISCHE PATENTANMELDUNG

(11) **EP 0 623 755 A1**
(43) Veröffentlichungstag der Anmeldung: **09.11.1994**
(21) Anmeldenummer: 94107066.6
(22) Anmeldetag: 05.05.1994
(51) Int. Cl.: F16B 2/04, F16B 9/02, F16B 7/18, F16D 1/08

(54) **Schraubgewindeverbindung**

(30) Priorität: 05.05.1993 DE 4314864
(71) Anmelder: Seewang, Peter, D-78120 Furtwangen (DE)
(72) Erfinder: Seewang, Peter, D-78120 Furtwangen (DE)
(74) Vertreter: Allgeier, Kurt

(57) **Zusammenfassung**

Schraubgewindeverbindung zwischen wenigstens zwei parallel- und ebenflächig geformten, miteinander zu verbindenden Teilen mit wenigstens je einer Anschlussfläche (2) und einer Gegenfläche (3), deren Trennspaltebene gegenüber der Schraubgewindeachse in einem Winkel verläuft, bei der die Trennspaltebene, gegenüber der Schraubgewindeachse in einem Winkel im Bereich von ca. 90 Grad verläuft, und mit einem mit einem Muttergewinde versehenen Arbeitsteil (7) in welches eine Schaftschraube (21) einschraubbar ist, und ferner ein eine in der Trennspaltebene verlaufende ebene Anschlussfläche (2) aufweisendes Anschlussteil und/oder ein mit diesem in Wirkverbindung stehendes Bauteil (9) sowie mit einer in der Trennspaltebene verlaufende, ebene unter einer in der Schraubgewindeachse wirkenden Vorspannung gegenüber der Anschlussfläche (2) gehaltenen Gegenfläche (3) des Arbeitsteils (7) oder eines mit diesem in Wirkverbindung stehenden Elements, und mit einem in der Trennspaltebene an der Anschlussfläche (2) oder an der Gegenfläche im peripheren Flächenbereich angebrachten Kippnocken (10).

## Beschreibung

Die Erfindung betrifft eine Schraubgewindeverbindung zwischen wenigstens zwei parallel- und ebenflächig geformten, miteinander zu verbindenden Teilen mit wenigstens einer Anschlussfläche und einer Gegenfläche, deren Trennspaltebene gegenüber der Schraubgewindeachse in einem Winkel verläuft.

Derartige Schraubgewindeverbindungen sind für vielfältige Zwecke im Maschinen- und Apparatebau bekannt. Ferner ist auch eine Schraubgewindeverbindung bei einem inkrementalen oder absoluten Drehgeber nach der EP 0 270 768 B1 zur drehfesten Verbindung der Geberwelle mit der Antriebswelle bekannt. Diese bekannte Wellen-Verbindung besteht aus zwei vollflächig aufeinandergepressten schräg zur Wellenachse verlaufenden Endflächen der Geber- und der Antriebswelle, die als Gleitflächen ausgebildet und mittels einer Zugschraube unter Vorspannung gehalten sind. Die Schrägstellung der Schrägflächen gegenüber der in der Schraubgewindeachse wirkenden Presspannung muss wenigstens so gross sein, dass keine Selbsthemmung sondern das gewünschte Gleitverhalten auftritt.

Durch diese Verbindung wird zwar eine formschlüssig verdrehfeste Wellenverbindung geschaffen, jedoch ist nicht sichergestellt, dass die Verbindung ohne Radialschlag achsgetreu ist. Infolge des unkontrollierbaren Gleitens der beiden Schrägflächen in radialer Richtung wird auf insbesondere das eine der beiden Wellenenden eine Querkraftkomponente ausgeübt, wodurch ein möglicherweise geringer, jedoch unvermeidlicherweise auftretender Axialversatz verursacht wird.

Aufgabe der Erfindung ist es, eine Schraubgewindeverbindung zu schaffen, welche diesen Nachteil vermeidet und welche in abgewandelten Ausbildungsweisen nicht nur als drehfeste Wellenverbindung verwendbar ist, sondern in vielfältigster Weise als Kupplungs- und als Bauelement sich zur Lösung verschiedenartigster Aufgaben eignet.

Ausgehend von dem geschilderten Stand der Technik ist die erfindungsgemässe Basis-Ausbildung gekennzeichnet durch
A. eine gegenüber der Schraubgewindeachse in einem Winkel im Bereich von ca. 90 Grad verlaufende Trennspaltebene,
B. ein mit einem Muttergewinde versehenes Arbeitsteil, in welches eine Schaftschraube einschraubbar ist,
C. ein eine in der Trennspaltebene verlaufende ebene Anschlussfläche aufweisendes Anschlussteil und/oder ein mit diesem in Wirkverbindung stehendes Bauteil,
D. eine in der Trennspaltebene verlaufende ebene unter einer in der Schraubgewindeachse wirkenden Vorspannung gegenüber der Anschlussfläche gehaltene Gegenfläche des Arbeitsteils oder eines mit diesem in Wirkverbindung stehenden Elements,
E. einen in der Trennspaltebene an der Anschlussfläche oder an der Gegenfläche im peripheren Flächenbereich angebrachten Kippnocken.

Durch diese Ausbildungsweise werden in schrägen Winkeln zur Dreh- bzw. System-Achse verlaufende Trennflächen vermieden, durch welche ein Achsversatz mit unvermeidlich nachteiligen Folgen wie beispielsweise Achskrümmung oder Unwuchtschlag bei rotierenden Systemen verursacht wird.

Die oben gekennzeichnete Basis-Ausbildung lässt gewisse Ausbildungsvarianten zu und eröffnet einen ausserordentlich weiten Anwendungsbereich. Eine Ausbildungsvaraiante ist darin zu sehen, dass der gewünschte Grad der Selbsthemmung zwischen dem Arbeitsteil und dem Anschlussteil durch Bemessung seiner wirksamen Höhe im Verhältnis zum Durchmesser des Muttergewindes und in Abhängig keit von der Mass-Differenz F1/F2 zwischen der Schraubgewindeachse und der Innenkante des Kippnockens und der Aussenkante des Anschlussteils bestimmbar ist. Eine andere Gestaltungsmöglichkeit besteht darin, dass der Kippnocken aus einem Stift besteht, der in dem das Muttergewinde aufweisenden Arbeitsteil oder dem an diesem anliegenden, den Spalt bildenden und zu verbindenden Anschlussteil, um das Mass der Höhe hervorstehend eingelassen ist. Ferner kann die Ausführung auch derart getroffen sein, dass der Kippnocken aus einem Stollen besteht, der an dem das Muttergewinde aufweisenden Arbeitsteil oder dem an diesem anliegenden, den Spalt bildenden und zu verbindenden Anschlussteil um das Mass der Höhe hervorstehend angebracht ist.

Durch diese Beispiele sind die Aus- und Umgestaltungsmöglichkeiten nicht erschöpft, sondern es ergeben sich unter Beibehaltung des Basissystems bei typischen Anwendungsaufgaben jeweils gesonderte Anwendungslösungen. Eine dieser Anwendungen zur Übertragung von axialgerichteten und Rotationskräften bei einer Friktionskupplung mit einer Antriebswelle und einer Abtriebsscheibe weist folgende Merkmale auf:
A. ein mit dem Muttergewinde versehene dem Arbeitsteil entsprechende Kupplungsabtriebsscheibe,
B. eine mit einer Hohlbohrung versehene Schaftschraube,
C. eine in der Trennspaltebene verlaufende ebene Anschlussfläche aufweisendes, mit dem als Antriebswelle arbeitenden Bauteil in Verbindung stehenden Anschlussteil,
D. eine in der Trennspaltebene verlaufende ebene, unter einer in der Schraubengewindeachse wirkenden Vorspannung gegenüber der Anschlussfläche gehaltene Gegenfläche der dem Arbeitsteil entsprechenden mit der Kupplungsabtriebsscheibe in Wirkverbindung stehenden Schraubenschaft,
E. einen in der Trennspaltebene an der Anschlussfläche oder der Gegenfläche im peripheren Bereich angebrachten Kippnocken,
F. einen in der Hohlbohrung der Ankerschraube geführten, mittels seines Kugelkopfes in einer konkav-kugeligen Vertiefung des Anschlussteils gelagerten Zuganker, der mittels einer Druckfeder unter Vorspannung gehalten ist, die sich auf der Ankerschraube abstützt.

Durch diese Ausbildungsweise wird jeglicher Wellenschlag vermieden und es wird eine leicht lösbare, absolut drehfeste Verbindung geschaffen, da lediglich der an dem Kugelkopf gelagerte Anschlussteil einer geringen Schrägstellung ausgesetzt ist, welche sich jedoch auf die übrigen formsteifen Elemente der Verbindung nicht auszuwirken vermag.

Eine vorteilhafte Ausführung dieser Anwendung bei der Friktionskupplung oder einer vergleichbaren Verbindung rotierender Wellen ist noch darin zu sehen, dass die Druckfeder in einer zylindrischen Ringnut des Kopfes der Ankerschraube eingelassen und deren Widerlager als auf dem Zugankers angeordnete Ringfeder aus gebildet ist. Dadurch wird die Vorspannung des Spannankers in einfacher und platzsparender Weise erreicht. In etwa abgewandelter Weise kann dies auch dadurch ermöglicht werden, dass die Druckfeder in einer zylindrischen Ringnut des Kopfes der Ankerschraube eingelassen und deren Widerlager von einer Mutter gebildet ist, welche verstellbar auf dem als Gewindestift ausgebildeten Ende des Zugankers aufgeschraubt ist.

Eine weitere vorteilhafte Anwendungsmöglichkeit bezieht sich auf eine Muffenverbindung von zwei geraden RohrelementEndstücken, die folgende Merkmale aufweist:
A. ein Muffenstück mit zwei beidseitigen Anschlussteilen mit in der Trennspaltebene verlaufenden Anschlussflächen und an diesen im peripheren Bereich angebrachten Kippnocken, und
B. beidseitig auf die Anschlussteile aufgesteckten Rohrelement-Endstücke, die
C. mit den mit Muttergewinden und mit den Gegenflächen versehenen Arbeitsteilen in Wirkverbindung stehen,
D. sowie je eine in die Arbeitsteile eingeschraubte Schaftschraube, welche die Vorspannung zwischen den Anschlussteilen und den Arbeitsteilen erzeugt.

Auch hier werden die bereits genannten Vorteile voll wirksam; diese werden noch dadurch erweitert, dass die Verbindung sehr einfach lösbar ist. Durch Lockern der Schaftschraube, ohne sie völlig zu lösen, wird die Vorspannung abgebaut und die Teile lassen sich problemlos voneinander trennen.

Dasselbe gilt auch für ein abgewandelte Muffenverbindung von Rohrlement-Endstücken mit zwei oder mehr geraden Rohrelement-Endstücken, wobei diese in einer oder zwei Ebenen verlaufen können. Diese Anwendung benutzt ebenfalls ein Muffenstück mit wenigstens zwei in einer oder zwei Ebenen verlaufenden Anschlussteilen mit in der jeweiligen Trennspaltebene verlaufenden Anschlussflächen sowie auf die Anschlussteile aufgesteckte Rohrelement-Endstücke, die mit den mit Muttergewinden und mit den Kippnocken versehene Gegenflächen aufweisenden Arbeitsteilen in Wirkverbindung stehen sowie mit je einer in die Arbeitsteile eingeschraubten Ankerschraube, welche die Vorspannung zwischen den Anschlussteilen und den Arbeitsteilen erzeugt.

Eine Erweiterung der Anwendung der Erfindung bei derartigen Muffenverbindungen kann beispielsweise auch durch die Ausbildung eines räumlichen Verbindungsknotens geschaffen werden, die ein sternförmiges Muffenstück mit wenigstens vier in zwei Ebenen verlaufenden Anschlussteilen mit in der jeweiligen Trennspaltebene verlaufenden Anschlussflächen sowie auf die Anschlussteile ausgesteckte Rohrelement-Endstücke, die mit den mit Muttergewinden und mit den mit den Kippnocken versehene Gegenflächen aufweisenden Arbeitsteilen in Wirkverbindung stehen, sowie durch je einer in die Arbeitsteile eingeschraubten Schaftschraube, welche die Vorspannung zwischen den Arbeitsteilen und den Anschluss teilen erzeugt.

Auch sind knotenartige Winkelmuffenverbindungen für Vierkantrohre unter Anwendung der Erfindungsmerkmale möglich, welche gekennzeichnet sind durch:
A. ein Muffenstück mit wenigstens zwei in einer oder zwei Ebenen verlaufenden Anschlussteilen mit in der jeweiligen Trennspaltebene verlaufenden Anschlussflächen,
B. auf die Anschlussteile aufgesteckte Vierkant-Rohrelement-Endstücke,
C. mit den mit Muttergewinden und mit den mit den Kippnocken versehene Gegenflächen aufweisenden Arbeitsteilen in Wirkverbindung stehen, sowie durch
D. je einer in die Arbeitsteile des Muffenstücks eingeschraubten Schaftschraube, welche die Vorspannung zwischen den Arbeitsteilen und den Anschlussteilen erzeugt.

Bei einem inkrementalen oder absoluten Drehgeber ist zwischen der Antriebswelle und der Geberwelle eine drehfeste Verbindung zu schaffen, die erfindungsgemäss unter Benutzung folgender Merkmale hergestellt werden kann:
A. ein mit der Antriebswelle in drehfester Verbindung stehendes Arbeitsteil mit einem in der Trennspaltebene verlaufenden Anschlussfläche und an dieser im peripheren Bereich angebrachten Kippnocken sowie einem Muttergewinde,
B. eine im Drehgebergehäuse gelagerte als Hohlwelle ausgebildete Geberwelle mit auf dieser angebrachter Teilscheibe und mit zur Trennspaltebene weisender Gegenfläche die,
C. mit der Anschlussfläche mittels der sich in der Hohlbohrung der Geberwelle abstützenden Zugschraube unter axialer Vorspannung in Wirkverbindung gehalten ist.

In abgewandelter Ausbildungsweise ist eine Lösung derselben Aufgabe möglich durch ein mit der als Hohlwelle ausgebildeten Antriebswelle in drehfester Verbindung stehendes, an seiner Stirnfläche mit einem Kippnocken versehenes Kippteil, in welches eine Bohrung zum Durchstecken der Schaftschraube angebracht ist sowie eine im Drehgebergehäuse gelagerte, mit einer Teilscheibe versehene Geberwelle mit stirnseitig einer Gegenfläche und einem Muttergewinde, die mit der Stirnfläche der Antriebswelle unter axialer Vorspannung durch die Schaftschraube in Wirkverbindung steht.

Weitere Merkmale und Besonderheiten der Erfindung sind den Ausführungsbeispielen zu entnehmen, welche in der Zeichnung dargestellt und nachstehend näher erläutert sind. Es zeigen
- Fig. 1: eine erfindungsgemässe Schraubgewindeverbindung zwischen einer ebenen Scheibe und einem Rohr;
- Fig. 2: eine erfindungsgemässe Friktionskupplung zur Übertragung von axialgerichteten und Rotationskräften;
- Fig. 3: einen Schnitt A-B gemäss Fig. 2;
- Fig. 4: Anwendung bei einer Friktionskupplung zwischen Antriebswelle und Abtriebsscheibe;
- Fig. 5: Anwendung entsprechend Fig. 4 in abgewandelter Ausführung;
- Fig. 6: Anwendung der Erfindung bei einer Muffenverbindung von zwei geraden Rohrelement-Endstücken;
- Fig. 7: Querschnitt C-D nach Fig. 6;
- Fig. 8: Anwendung der Erfindung bei einer Winkel-Muffenverbindung von drei geraden Rohrelement-Endstücken;
- Fig. 9: Darstellung nach Fig. 8 um 90° um die Vertikalachse geschwenkt;
- Fig. 10: Darstellung nach Fig. 8 um 90° um die Horizontalachse geschwenkt;
- Fig. 11: Anwendung der Erfindung bei einer sternförmigen, als räumlicher Verbindungsknoten ausgebildeten Muffenverbindung von fünf Rohrelement-Endstücken;
- Fig. 12: Darstellung nach Fig. 11 um 90° um die Horizontalachse geschwenkt;
- Fig. 13: Anwendung der Erfindung bei einer Winkel-Muffenverbindung von drei Vierkant-Rohrelement-Endstücken in Vertikalschnitt-Darstellung;
- Fig. 14: Teilschnitt-Darstellung nach Fig. 13 um die Vertikal-Achse um 90° geschwenkt;
- Fig. 15: Vertikal-Draufsicht gemäss Fig. 14;
- Fig. 16: Anwendung der Erfindung auf die drehfeste Verbindung der Geberwelle mit der Antriebswelle eines Drehgebers im Axialschnitt;
- Fig. 17: Anwendung der Erfindung auf die drehfeste Verbindung der Geberwelle mit der Antriebswelle eines Drehgebers in einer abgewandelten Ausbildung im Axialschnitt.

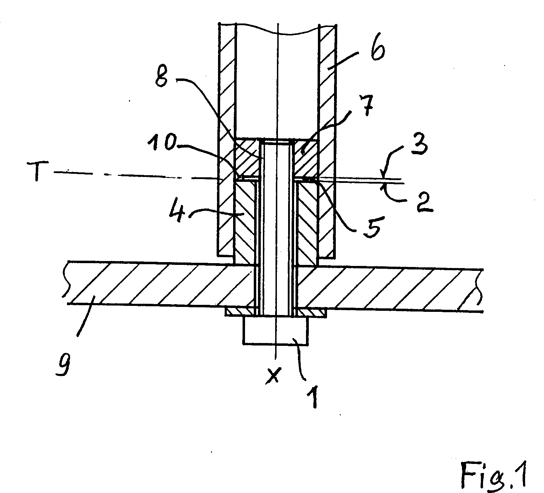

In Fig. 1 ist das eine zu verbindende Bauteil eine Scheibe 9 und das andere ein Rohrelement-Endstück 6; es kann sich um feststehende oder eine Hauptachse "x" rotierende Bauteile handeln. Das Anschlussteil 4 steht in Wirkverbindung mit der Scheibe 9 und das Arbeitsteil 7 steht in Wirkverbindung mit dem Rohrelement-Endstück 6. Das Anschlussteil 4 und das Arbeitsteil 7 weisen je eine in der Radialebene zur Hauptachse "x", als Trennspaltebene "T" bezeichnet, verlaufende Anschlussfläche 2 und Gegenfläche 3 auf. Auf der Gegenfläche 7 befindet sich im peripheren Bereich der Kippnocken 10. Die Schaftschraube 1 durchsetzt das Bauteil 9 und das Anschlussteil 4 und ist in das Muttergewinde 8 im Arbeitsteil 7 eingeschraubt, wobei sie eine Zugspannung auf die zwei letztgenannten Teile ausübt, die zu einer erhöhten Kantenpressung dieser Teile innerhalb des Rohrelement-Endstücks 6 und damit zu einer Klemmwirkung führt. Dadurch werden das Bauelement 9 und das Rohrelement-Endstück durch Friktion drehfest miteinander verbunden.

Wenn es sich dabei um rotierende oder unter Zugkraft stehende Bauteile handelt, ist damit zugleich ein Bruch-Sicherheitseffekt verbunden, weil die höchstzulässigen Zug- oder Torsionskräfte durch die Grösse der Zugspannung eingestellt werden können. Bei Überschreiten der eingestellten Zulässigkeitsgrenze löst sich die Verbindung und es wird ein eventuell mit Zerstörungsfolgen einhergehender Bruch vermieden.

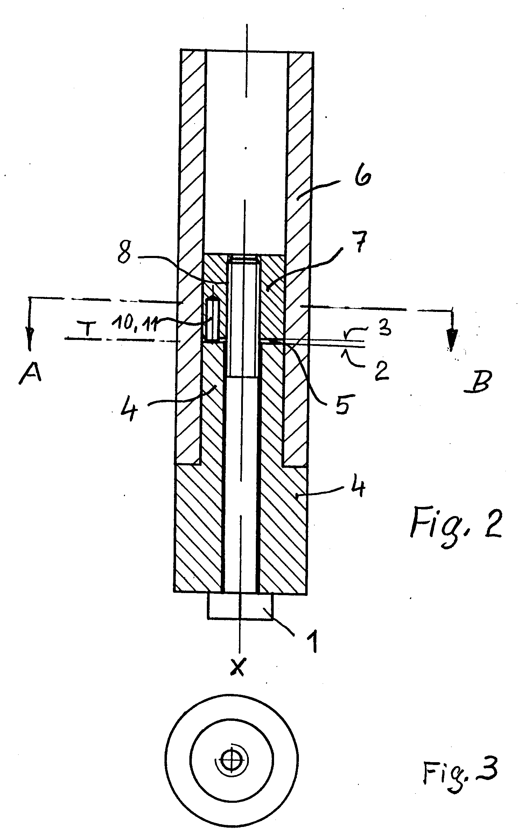

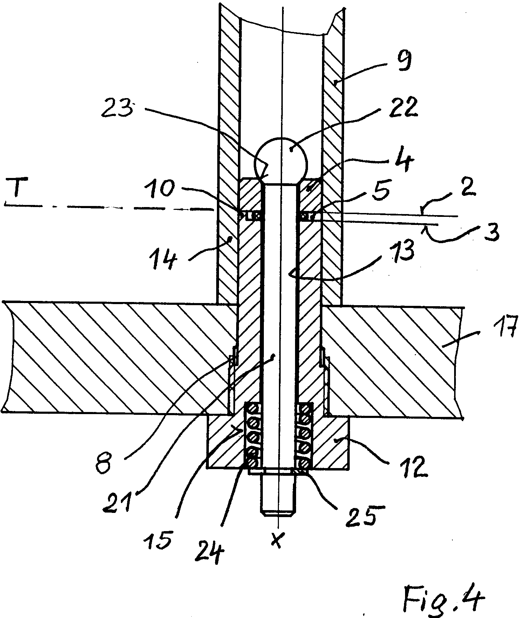

Nach demselben Prinzip arbeitet die in den Fig. 2 und 3 dargestellte Friktionskupplung zur Übertragung von axialgerichteten und Rotationskräften. Auch hier wird durch die bereits oben im einzelnen beschriebenen Elemente in dem Rohrelement-Endstück 6 infolge Kantenpressung eine Friktionskraft erzeugt, deren Stärke einstellbar ist. In diesem Fall ist der Kippnocken 10 als Stift 11 ausgebildet.

In abgewandelter Bauweise gemäss Fig. 4 kann eine Friktionskupplung zwischen Antriebswelle und Abtriebsscheibe ausgebildet sein. Auch hier geht es darum, ein Kupplungsteil, nämlich die Kupplungsabtriebsscheibe 17 mit dem als Antriebswelle arbeitenden Bauteil 9 zu verbinden, wobei die Friktion durch die Zugkraft einer Ankerschraube 12 aufgebracht wird, welche mit ihrem Schaftgewinde in die Gewindebohrung 8 der Kupplungsabtriebsscheibe 17 eingeschraubt wird. Die Ankerschraube 12 weist eine Hohlbohrung 13 auf, der Spannanker 21 verläuft, der mittels eines Kugelkopfes 22 in einer konkav-kugeligen Vertiefung 23 des Anschlussteils 4 unter der Vorspannung einer Schraubendruckfeder 24 gelagert ist und das Anschlussteil 4 mit der Anschlussfläche 2 im Trennspaltbereich gegen die Gegenfläche 3 der Ankerschraube 12 anpresst, welche mit dem Kippnocken 10 versehen ist. Dabei ist die Druckfeder 24 in einer zylindrischen Ringnut 15 des Kopfes der Ankerschraube 12 eingelassen, wobei als Widerlager eine auf dem Spannanker 21 angeordnete Ringfeder dient. Mit 5 ist der Ringspalt bezeichnet.

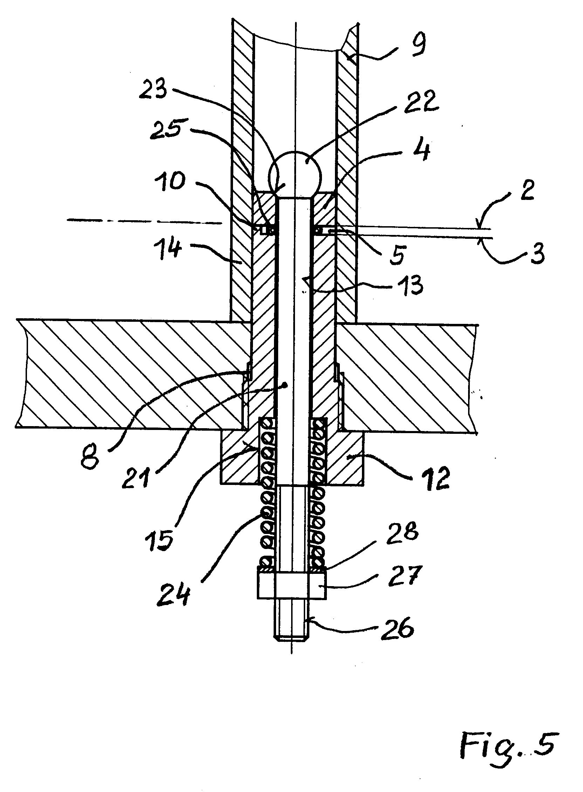

In abgewandelter Ausführung nach Fig. 5 läuft der Spannanker 21 in einen Gewindestift 26 mit einer auf diesen aufgeschraubten Mutter 27 aus, an die sich eine Unterlegscheibe 28 als Widerlager anlegt, welche das Widerlager für die Druckfeder 24 darstellt.

Der Vorteil dieser Ausführung gegenüber der Ausbildung nach Fig. 4 ist darin zu sehen, dass der Federdruck und damit die Friktionskraft der Kippnockenverbindung sehr fein eingestellt werden und damit der Rutscheffekt nach Wunsch dosierbar ist, wenn es sich darum handelt, die Kraftübertragung auf eine Sollgrösse zu begrenzen.

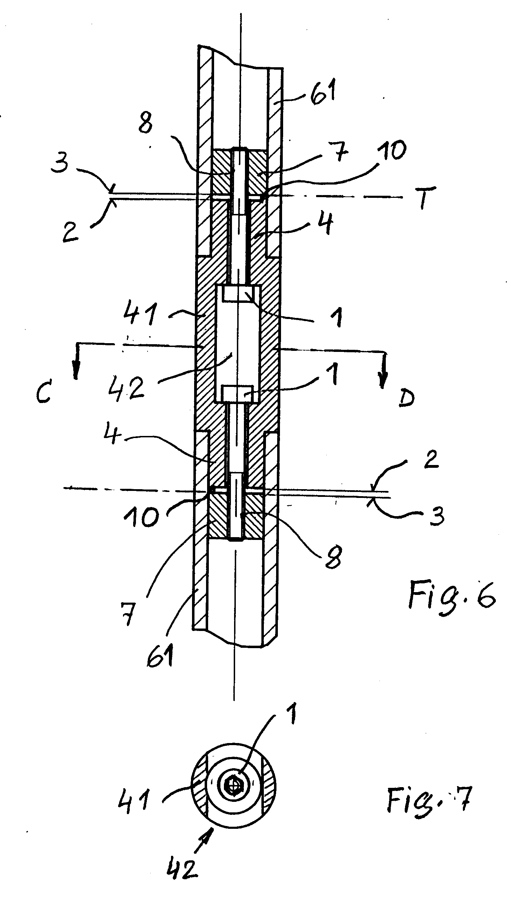

Eine weitere Anwendung nach den Fig. 6 und 7 ermöglicht eine einachsige Muffenverbindung von zwei geraden RohrelementEndstücken. Diese Verwendung ist anwendbar, unabhängig davon, ob es sich dabei um eine ruhende oder rotierende Konstruktion handelt. Das Muffenstück 41 hat beidendig die Anschlussteile 4 mit in der Trennspaltebene T verlaufenden Anschlussflächen 2 und an diesen im peripheren Bereich angebrachten Kippnocken 10. Auf die Anschlussteile 4 sind beidseitig die Rohrelement-Endstücke 61 aufgesteckt, und diese stehen mit den mit den Muttergewinden 8 versehenen und die Gegenflächen 3 aufweisenden Arbeitsteilen 7 in Wirkverbindung. Durch in die Muttergewinde 8 der Arbeitsteile 7 eingeschraubte Schaftschrauben 1 wird die Spannverbindung mit dem Muffenstück 41 hergestellt, welches mit den Fenstern 42 zum Einsetzen und Anziehen der Schaftschrauben 1 versehen ist. Bei rotierenden Muffenverbindungen kann das Soll-Übertragungsdrehmoment durch die Dosierung der Spannkraft mittels der Schaftschrauben eingestellt werden.

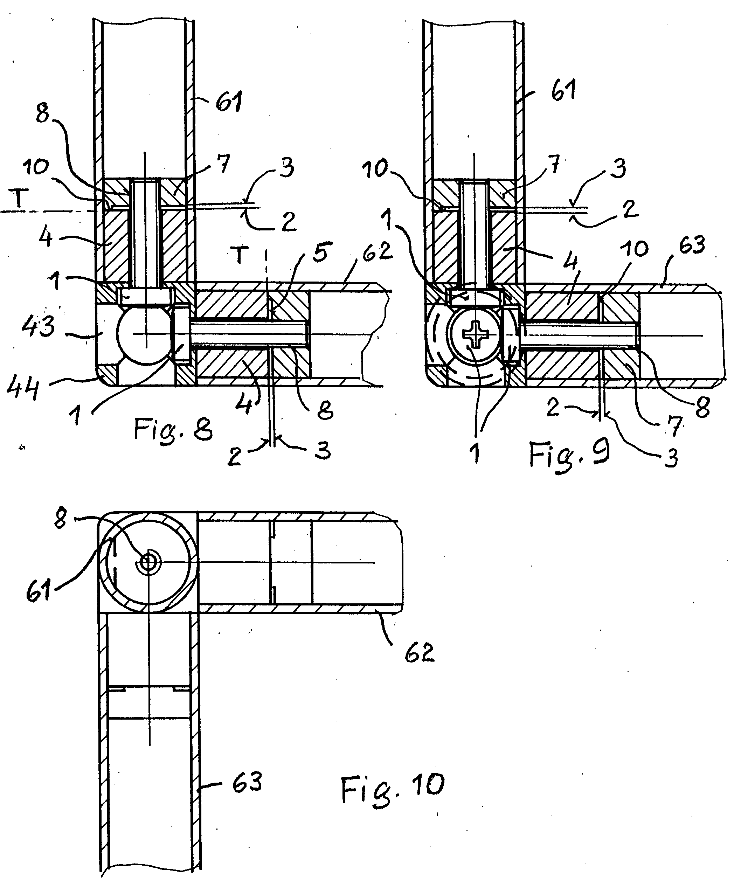

In den Fig. 8 bis 10 ist in verschiedenen Ansichten bzw. Teilschnitten eine Schraubgewindeverbindung dargestellt, die drei in zwei Ebenen verlaufende Rohrelement-Endstücke 61, 62, 63 knotenartig zusammenfasst. Mit 44 ist das dreiachsige Muffenstück bezeichnet, welches mit drei Anschlussteilen 4 und den Fenstern 43 versehen ist, um die Zugänglichkeit für das Einführen der Schaftschrauben 1 zu ermöglichen. Diese sind in die Muttergewinde 8 in den Arbeitsteilen 7 eingeschraubt, welche mit den auf die Anschlussteile 4 aufgesteckten Rohrelement-Endstücken 61, 62, 63 in Wirkverbindung stehen und mit Kippnocken 10 versehen sind, die in den Trennspaltebenen T sich auf die Anschlussflächen 2 abstützen. Durch Anziehen der Schaftschrauben 1 wird die Spannkraft erzeugt, mittels welcher die Friktionskupplung mit den Rohrelement-Endstücken 61, 62, 63 hergestellt wird.

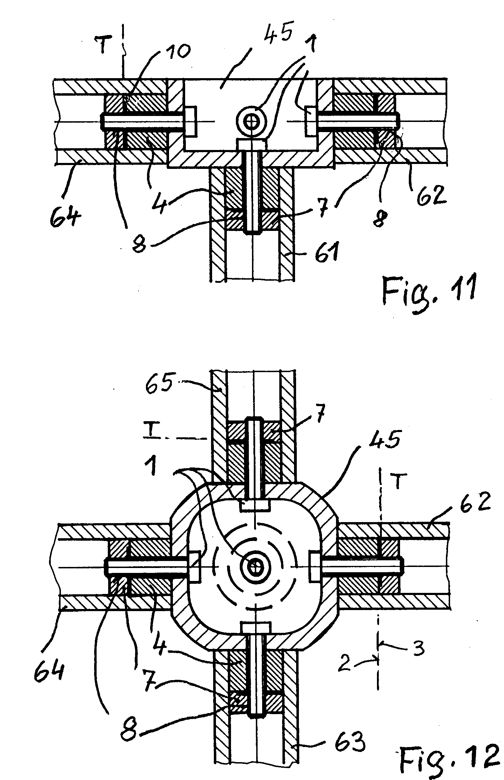

Eine hiervon abgewandelte Knotenverbindung ist aus den Darstellungen der Fig. 11 und 12 ersichtlich. Dabei sind fünf Rohrelement-Endstücke 61 bis 65 in zwei Ebenen in einem sternförmigen Muffenstück 45 zusammengefasst, welches mit fünf Anschlussteilen 4 ausgerüstet ist, auf welche die erwähnten Rohrelement-Endstücke aufgesteckt sind. In gleicher Weise wie bei den Ausführungen an den Fig. 8 bis 10 erfolgt die Herstellung einer Spannkraft durch die Schaftschrauben 1, die in die Muttergewinde 8 der Arbeitsteile 7 eingeschraubt sind, und die mit den Rohrelement-Endstücken 61, 62, 63 in Wirkverbindung stehen.

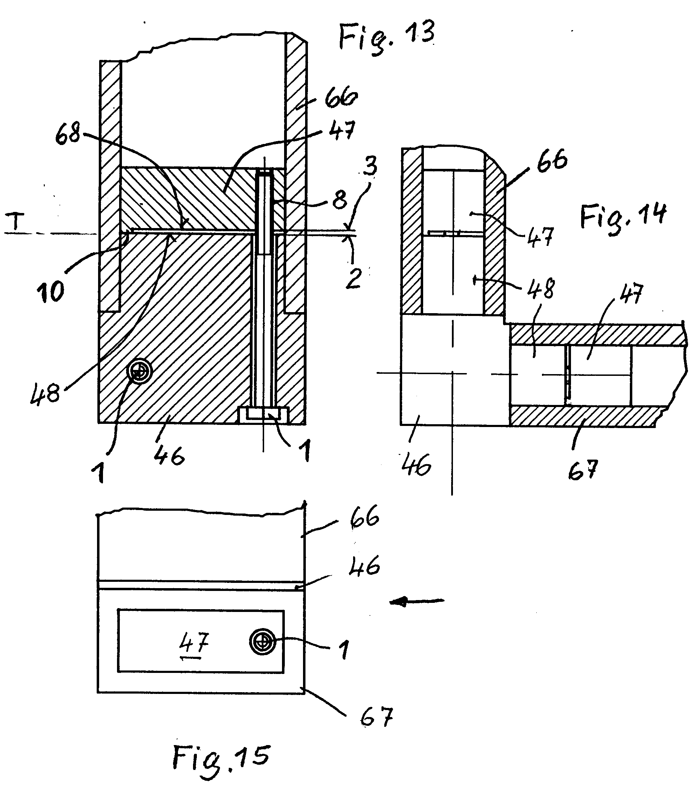

Mit der Knotenverbindung nach den Fig. 8 bis 10 vergleichbar ist das Anwendungsbeispiel nach den Fig. 13, 14 und 15. Auch hier handelt es sich um eine Schraubverbindung von drei in zwei Ebenen verlaufenden, jedoch vierkantigen RohrelementEndstücken 66 und 67, die auf Arbeitsteile 48 des Vierkant-Muffenstücks 46 aufgesteckt sind. Mittels der mit 1 bezeichneten, in die Muttergewinde 8 eingeschraubten Schaftschrauben wird die Spannkraft erzeugt, durch die die das Muttergewinde 8 aufweisenden Anschlussteile 47 mit dem Vierkant-Muffenstück 46 verspannt werden, wobei die Kippnocken 10 in den Trennspaltebenen T die Friktionsverbindung bewirken.

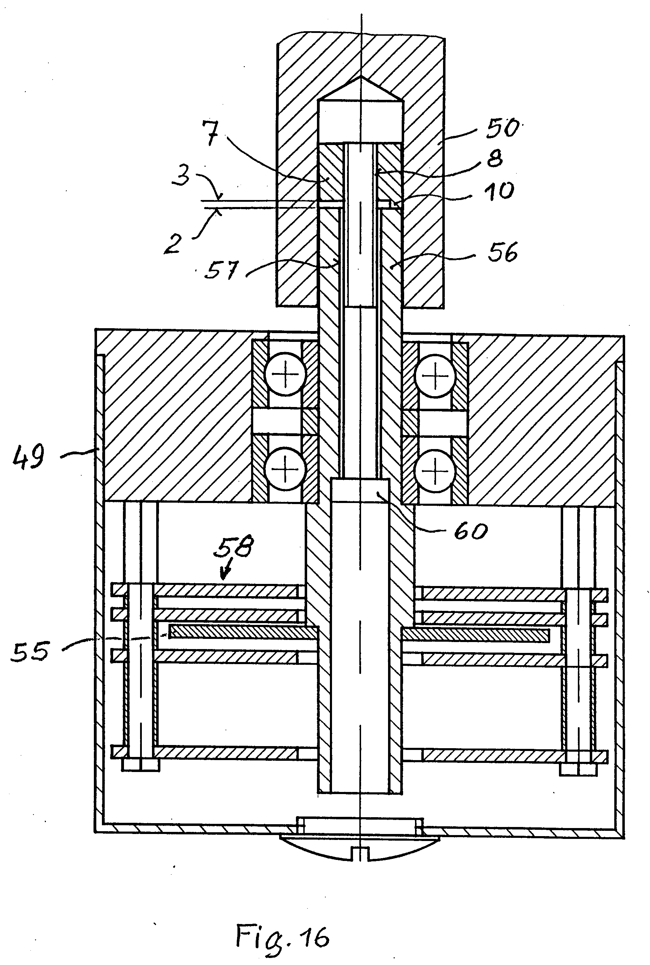

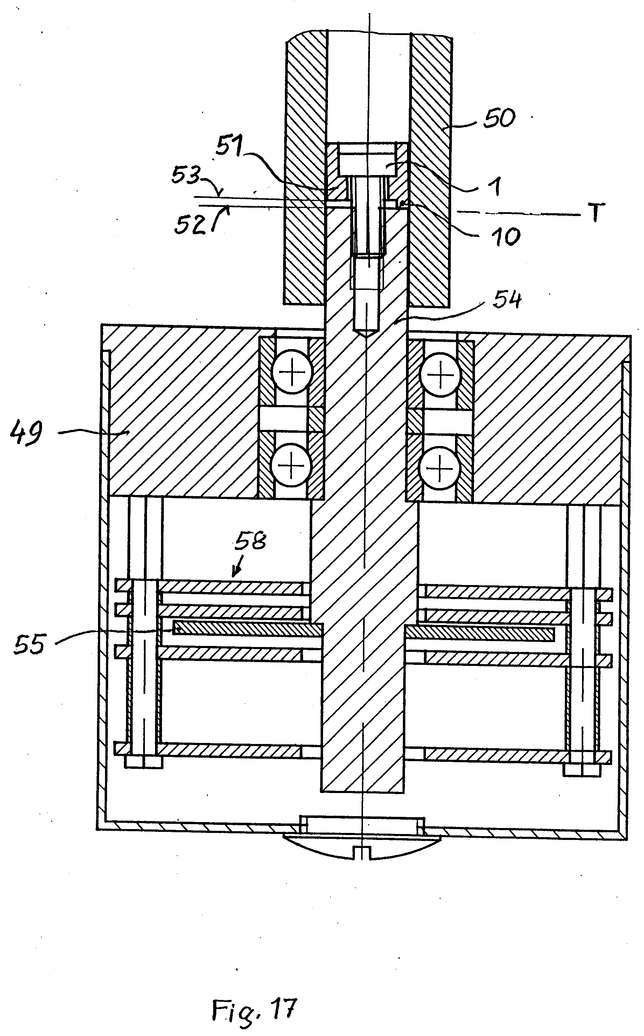

In den Fig. 16 und 17 sind Anwendungen von Kippnocken-Verbindungen an rotierenden Vorrichtungen dargestellt, wobei es sich um Drehgeber handelt. Mit 49 ist jeweils das Drehgebergehäuse bezeichnet, und mit 50 die Antriebs- und mit 56 die Geberwelle, auf welcher die Teilscheibe 55 im Bereich der Abtastbaueinheit 58 sitzt. Bei der Anwendung gem. Fig. 16 wird mittels der in einer Geberwellen-Hohlbohrung 57 eingesetzten Zugschraube 60 durch Einschrauben in das Muttergewinde 8 in dem mit dem Kippnok ken 10 versehenen Arbeitsteil 7 die erforderliche Spannkraft erzeugt, um die Kippnockenfriktionsverbindung mit dem Arbeitsteil 7 herzustellen, welches mit der Antriebswelle 50 in Wirkverbindung steht.

In Abwandlung hiervon ist gem. Fig. 17 die zur Spannkrafterzeugung dienende, in das Kippteil 51 mit dem Kippnocken 10 versehene Schaftschraube 1 in die Geberwelle 54 eingeschraubt. Mit 52 und 53 sind die Gegenfläche und die Stirnfläche in der Trennspaltebene T bezeichnet, in welcher beim Anziehen der Schaftschraube 1 die Kippnockenfriktionsverbindung hergestellt wird.

Auch bei diesen beiden Anwendungen kann die Friktionskraft durch entsprechendes Anziehen der Schraubverbindung dosiert, und es kann die Verbindung durch Lockern der Schraubverbindung jederzeit leicht gelöst bzw. getrennt werden.

## Patentansprüche

1. Schraubgewindeverbindung zwischen wenigstens zwei parallel- und ebenflächig geformten, miteinander zu verbindenden Teilen mit wenigstens je einer Anschlussfläche und einer Gegenfläche, deren Trennspaltebene gegenüber der Schraubgewindeachse in einem Winkel verläuft
gekennzeichnet durch
A. eine gegenüber der Schraubgewindeachse (x) in einem Winkel im Bereich von ca. 90 Grad verlaufende Trennspaltebene (T),
B. ein mit einem Muttergewinde (8) versehenes Arbeitsteil (7), in welches eine Schaftschraube (1) einschraubbar ist,
C. ein eine in der Trennspaltebene (T) verlaufende ebene Anschlussfläche (2) aufweisendes Anschlussteil (4) und/oder ein mit diesem in Wirkverbindung stehendes Bauteil (9),
D. eine in der Trennspaltebene (T) verlaufende ebene unter einer in der Schraubgewindeachse (x) wirkenden Vorspannung gegenüber der Anschlussfläche (2) gehaltene Gegenfläche (3) des Arbeitsteils (7) oder eines mit diesem in Wirkverbindung stehenden Elements (6),
E. einen in der Trennspaltebene (T) an der Anschlussfläche (2) oder an der Gegenfläche (3) im peripheren Flächenbereich angebrachten Kippnocken (10).

2. Schraubgewindeverbindung nach Anspruch 1, dadurch gekennzeichnet, dass der gewünschte Grad der Selbsthemmung zwischen dem Arbeitsteil (7) und dem Anschlussteil (4) durch Bemessung seiner wirksamen Höhe (b) im Verhältnis zum Durchmesser (D) des Muttergewindes (8) und in Abhängigkeit von der Mass-Differenz F1/F2 zwischen der Schraubgewindeachse (x) und der Innenkante des Kippnockens (10) und der Aussenkante (30) des Anschlussteils (4) bestimmbar ist.

3. Schraubgewindeverbindung nach Anspruch 1, dadurch gekennzeichnet, dass der Kippnocken (10) aus einem Stift (11) besteht, der in dem das Muttergewinde (8) aufweisenden Arbeitsteil (7) oder dem an diesem anliegenden, den Spalt (5) bildenden und zu verbindenden Anschlussteil (4), um das Mass der Höhe (h) hervorstehend eingelassen ist.

4. Schraubgewindeverbindung nach Anspruch 1, dadurch gekennzeichnet, dass der Kippnocken (10) aus einem Stollen besteht, der an dem das Muttergewinde (8) aufweisenden Arbeitsteil (7) oder dem an diesem anliegenden, den Spalt (5) bildenden und zu verbindenden Anschlussteil (4) um das Mass der Höhe (h) hervorstehend angebracht ist.

5. Anwendung der Schraubgewindeverbindung nach einem oder mehreren der Ansprüche 1 bis 4 bei einer Friktionskupplung zur Übertragung von axialgerichten und Rotationskräften, bestehend aus Antriebswelle und Abtriebsscheibe,
gekennzeichnet durch
A. ein mit dem Muttergewinde (8) versehene dem Arbeitsteil (7) entsprechende Kupplungsabtriebsscheibe (17),
B. eine mit einer Hohlbohrung (13) versehene Ankerschraube (12),
C. eine in der Trennspaltebene (T) verlaufende ebene Anschlussfläche (2) aufweisendes, mit dem als Antriebswelle arbeitenden Bauteil (9) in Verbindung stehenden Anschlussteil (4),
D. eine in der Trennspaltebene (T) verlaufende ebene, unter einer in der Schraubengewindeachse (x) wirkenden Vorspannung gegenüber der Anschlussfläche (2) gehaltene Gegenfläche (3) der dem Arbeitsteil (7) entsprechenden mit der Kupplungsabtriebsscheibe (17) in Wirkverbindung stehenden Schraubenschaft (14),
E. einen in der Trennspaltebene (T) an der Anschlussfläche (2) oder der Gegenfläche (3) im peripheren Bereich angebrachten Kippnocken (10),
F. einen in der Hohlbohrung (13) der Ankerschraube (12) geführten, mittels seines Kugelkopfes (22) in einer konkav-kugeligen Vertiefung (23) des Anschlussteils (4) gelagerten Spannanker (21), der mittels einer Druckfeder (24) unter Vorspannung gehalten ist, die sich auf der Ankerschraube (12) abstützt.

6. Anwendung nach Anspruch 5 dadurch gekennzeichnet, dass die Druckfeder (24) in einer zylindrischen Ringnut (15) des Kopfes der Ankerschraube (12) eingelassen und deren Widerlager (25) als auf dem Spannankers (21) angeordnete Ringfeder ausgebildet ist.

7. Anwendung nach Anspruch 5 dadurch gekennzeichnet, dass die Druckfeder (24) in einer zylindrischen Ringnut (15) des Kopfes der Ankerschraube (12) eingelassen und deren Widerlager von einer Mutter (27) gebildet ist, welche verstellbar auf dem als Gewindestift (26) ausgebildeten Ende des Spannankers (21) aufgeschraubt ist.

8. Anwendung der Schraubgewindeverbindung nach wenigstens einem der Ansprüche 1 bis 4 bei einer Muffenverbindung von zwei geraden Rohrelement-Endstücken,
gekennzeichnet durch
A. ein Muffenstück (41) mit zwei beidseitigen Anschlussteilen (4) mit in der Trennspaltebene (T) verlaufenden Anschlussflächen (2) und an diesen im peripheren Bereich angebrachten Kippnocken (10), und
B. beidseitig auf die Anschlussteile (4) aufgesteckten Rohrelement-Endstücke (61), die
C. mit den mit Muttergewinden (8) und mit den Gegenflächen (3) versehenen Arbeitsteilen (7) in Wirkverbindung stehen,
D. sowie je eine in die Arbeitsteile (7) eingeschraubte Schaftschraube (1), welche die Vorspannung zwischen den Anschlussteilen (4) und den Arbeitsteilen (7) erzeugt.

9. Anwendung der Schraubgewindeverbindung nach wenigstens einem der Ansprüche 1 bis 4 bei einer Winkel-Muffenverbindung von zwei oder mehr geraden Rohrelement-Endstücken,
gekennzeichnet durch
A. ein Muffenstück (44) mit wenigstens zwei in einer oder zwei Ebenen verlaufenden Anschlussteilen (4) mit in der jeweiligen Trennspaltebene (T) verlaufenden Anschlussflächen (2),
B. auf die Anschlussteile (4) aufgesteckte Rohrelement-Endstücke (61, 62, 63), die
C. mit den mit Muttergewinden (8) und mit den Kippnocken (10) versehene Gegenflächen (3) aufweisenden Arbeitsteilen (7) in Wirkverbindung stehen,
D. sowie mit je einer in die Arbeitsteile (7) eingeschraubten Ankerschraube (1), welche die Vorspannung zwischen den Anschlussteilen (4) und den Arbeitsteilen (7) erzeugt.

10. Anwendung der Schraubgewindeverbindung nach wenigstens einem der Ansprüche 1 bis 4 bei einer sternförmigen, als räumlicher Verbindungsknoten ausgebildeten Muffenverbindung von mehr als vier geraden Rohrelement-Endstücken,
gekennzeichnet durch
A. ein sternförmiges Muffenstück (45) mit wenigstens vier in zwei Ebenen verlaufenden Anschlussteilen (4) mit in der jeweiligen Trennspaltebene (T) verlaufenden Anschlussflächen (2),
B. auf die Anschlussteile (4) ausgesteckte Rohrelement-Endstücke (61, 62, 63, 64, 65), die
C. mit den mit Muttergewinden (8) und mit den mit den Kippnocken (10) versehene Gegenflächen (3) aufweisenden Arbeitsteilen (7) in Wirkverbindung stehen, sowie durch
D. je einer in die Arbeitsteile (7) eingeschraubten Schaftschraube (1), welche die Vorspannung zwischen den Arbeitsteilen (7) und den Anschlussteilen (4) erzeugt.

11. Anwendung der Schraubgewindeverbindung nach wenigstens einem der Ansprüche 1 bis 4 bei einer Winkel-Muffenverbindung für Vierkantrohre,
gekennzeichnet durch
A. ein Muffenstück (46) mit wenigstens zwei in einer oder zwei Ebenen verlaufenden Anschlussteilen (47) mit in der jeweiligen Trennspaltebene (T) verlaufenden Anschlussflächen (48),
B. auf die Anschlussteile (47) aufgesteckte Vierkant-Rohrelement-Endstücke (66),
C. mit den mit Muttergewinden (8) und mit den mit den Kippnocken (10) versehene Gegenflächen (68) aufweisenden Arbeitsteilen (48) in Wirkverbindung stehen, sowie durch
D. je einer in die Arbeitsteile (48) des Muffenstücks (46) eingeschraubten Schaftschraube (1), welche die Vorspannung zwischen den Arbeitsteilen (48) und den Anschlussteilen (47) erzeugt.

12. Anwendung der Schraubgewindeverbindung nach wenigstens einem der Ansprüche 1 bis 4 bei einem inkremmentalen oder absoluten Drehgeber zur drehfesten Verbindung der Geberwelle mit der Antriebswelle,
gekennzeichnet durch
A. ein mit der Antriebswelle (50) in drehfester Verbindung stehendes Arbeitsteil (7) mit einem in der Trennspaltebene (T) verlaufenden Anschlussfläche (3) und an dieser im peripheren Bereich angebrachten Kippnocken (10) sowie einem Muttergewinde (8),
B. eine im Drehgebergehäuse (49) gelagerte als Hohlwelle ausgebildete Geberwelle (54) mit auf dieser angebrachter Teilscheibe (55) und mit zur Trennspaltebene (T) weisender Gegenfläche (2) die,
C. mit der Anschlussfläche (2) mittels der sich in der Hohlbohrung (59) der Geberwelle (56) abstützenden Zugschraube (60) unter axialer Vorspannung in Wirkverbindung gehalten ist.

13. Anwendung der Schraubgewindeverbindung nach wenigstens einem der Ansprüche 1 bis 4 bei einem inkremmentalen oder absoluten Drehgeber zur drehfesten Verbindung der Geberwelle mit der Antriebswelle,
gekennzeichnet durch
A. ein mit der als Hohlwelle ausgebildeten Antriebswelle (50) in drehfester Verbindung stehendes, an seiner Stirnfläche (53) mit einem Kippnocken (10) versehenes Kippteil (51), in welches eine Bohrung zum Durchstecken der Schaftschraube (1) angebracht ist,
B. eine im Drehgebergehäuse (49) gelagerte, mit einer Teilscheibe (55) versehene Gerberwelle (54) mit stirnseitig einer Gegenfläche (52) und einem Muttergewinde (8), die mit der Stirnfläche (53) der Antriebswelle (50) unter axialer Vorspannung durch die Schaftschraube (1) in Wirkverbindung steht.
